# EUROPÄISCHE PATENTSCHRIFT

(11) **EP 0 345 565 B1**
(45) Veröffentlichungstag und Bekanntmachung des Hinweises auf die Patenterteilung: **21.07.1993**
(21) Anmeldenummer: 89109524.2
(22) Anmeldetag: 26.05.1989
(51) Int. Cl.: B60N 2/36

(54) **Kraftfahrzeug mit einer umklappbaren Hintersitz-Rückenlehne und Kopfstützen**
Motor car with a tiltable rear seat back rest and head rests
Automobile avec un dossier de siège arrière rabattable et appui-têtes

(30) Priorität: 04.06.1988 DE 8807302 U
(43) Veröffentlichungstag der Anmeldung: 13.12.1989
(73) Patentinhaber: Adam Opel Aktiengesellschaft, 65428 Rüsselsheim (DE)
(72) Erfinder: Wolf, Manfed L., D-6140 Bensheim-Hochstätten (DE); Quistorf, Dieter H., Dipl.-Ing., D-6085 Nauheim (DE); Baltes, Horst, Dipl.-Ing., D-6093 Flörsheim (DE); Stenz, Karl, Dipl.-Ing., D-6200 Wiesbaden (DE); Zankl, Kurt, D-6085 Nauheim (DE)
(74) Vertreter: Bergerin, Ralf, Dipl.-Ing.

(56) Entgegenhaltungen:
- EP-A- 0 171 032
- DE-C- 3 229 983

## Beschreibung

**Die Erfindung** bezieht sich auf ein Kraftfahrzeug mit einer umklappbaren Hintersitz-Rückenlehne und Kopfstützen, welche in einem in Höhe der Lehnenoberkante quer im Kraftfahrzeug verlaufenden Bauteil gehalten sind. Ein solches Kraftfahrzeug ist Gegenstand der DE-C-3 229 983.

Bei dem bekannten Kraftfahrzeug handelt es sich bei dem quer verlaufenden Bauteil um einen unlösbar mit der Karosseriestruktur verbundenen Querträger, an welchem sich die Hintersitz-Rückenlehne abstützt, wenn sie sich in Gebrauchsstellung befindet. Diese Gestaltung hat gegenüber der sonst üblichen Befestigung der Kopfstützen an der Hintersitz-Rückenlehne den Vorteil, daß die Kopfstützen beim Umlegen der Hintersitz-Rückenlehne nicht abgebaut werden müssen. Nachteilig ist es bei Caravan-Fahrzeugen jedoch, daß der Querträger stets stehen bleibt; dadurch können bei umgelegter Hintersitz-Rückenlehne Gegenstände, die höher als der Raum unterhalb dieses Querträgers sind, nicht geladen werden.

**Der Erfindung** liegt die Aufgabe zugrunde, ein Kraftfahrzeug der eingangs genannten Art derart auszubilden, daß beim Umlegen der Hintersitz-Rückenlehne die Kopfstützen nicht demontiert werden müssen, bei dem es jedoch möglich ist, Gegenstände zu transportieren, die über die Oberkante der Hintersitz-Rückenlehne ragen.

Diese Aufgabe wird neuerungsgemäß dadurch gelöst, daß das Bauteil eine lösbar im Kraftfahrzeug angeordnete Laderaumabdeckung ist.

Durch diese Gestaltung hat man beim Transportieren von nicht über die Lehnenoberkante ragenden Gegenständen, genau wie bei dem Kraftfahrzeug nach der genannten DE-C-3 229 983, den Komfort, daß zum Umlegen der Hintersitz-Rückenlehne die Kopfstützen nicht demontiert werden müssen. Sollen jedoch sperrige Gegenstände geladen werden, so kann man die Laderaumabdeckung mit den Kopfstützen entfernen und dadurch die volle Laderaumhöhe nutzen.

Konstruktiv besonders einfach ist die Laderaumabdeckung gestaltet, wenn sie aus einem die Kopfstützen aufweisenden Mittelteil besteht, das lösbar zwischen zwei mit dem Kraftfahrzeug unlösbar verbundenen Seitenteilen gehalten ist.

Die lösbare Verbindung der Laderaumabdeckung mit den Seitenteilen kann sehr einfach gestaltet sein, indem das Mittelteil an seinen Seitenflächen vorspringende Zapfen und die Seitenteile entsprechende, entriegelbare Schlösser aufweist, welche jeweils eine Drehfalle zum formschlüssigen Halten des jeweiligen Zapfens aufweisen.

Die einzelnen Schlösser zum Halten des Mittelteils können einzeln nacheinander zum Lösen betätigt werden, so daß keine Übertragungsmittel zum gleichzeitigen Lösen der Schlösser verschiedener Fahrzeugseiten erforderlich sind, wenn gemäß einer anderen Ausgestaltung der Neuerung die Drehfalle durch eine Feder in Entriegelungsstellung vorgespannt und in Verriegelungsstellung durch einen Entriegelungshebel gehalten ist, welcher mit einem vorspringenden Nocken über die Drehfalle greift und von einer Feder in dieser Verriegelungsstellung gehalten ist.

Die Hintersitz-Rückenlehne kann in Gebrauchslage zuverlässig dadurch gesichert sein, daß sie in aufrechter Stellung an den beiden Seitenwänden der Karosserie arretiert ist.

**Die Erfindung** läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Ansicht der für die Neuerung wesentlichen Teile eines Kraftfahrzeugs,
- Fig. 2: einen Längsschnitt durch die Anordnung nach Figur 1 entlang der Linie II - II,
- Fig. 3: einen Schnitt durch eines der Schlösser der in den Figuren 1 und 2 gezeigten Laderaumabdeckung.

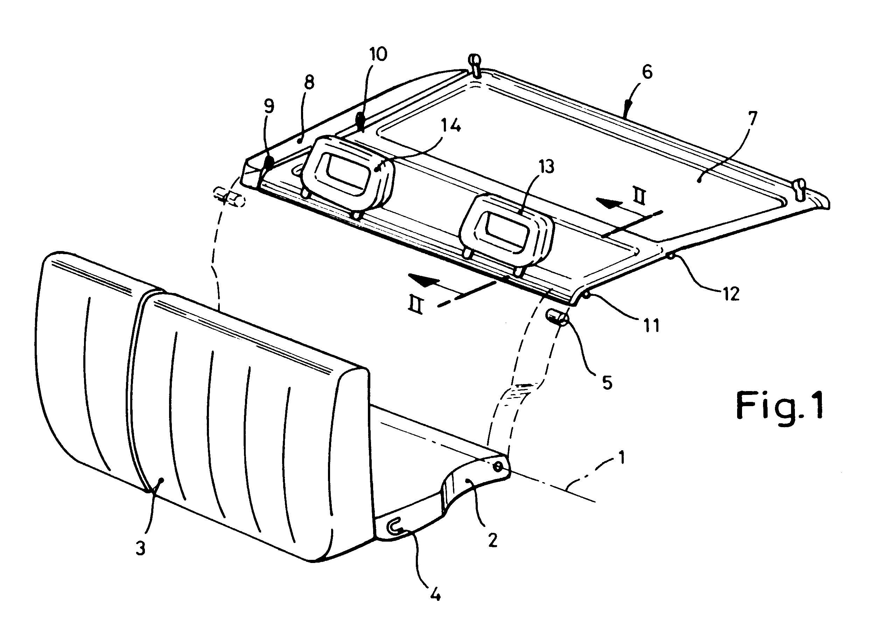

Die Figur 1 zeigt eine um eine quer im Kraftfahrzeug verlaufende Achse 1 schwenkbare Hintersitz-Rückenlehne 2 in nach vorn geklappter Stellung. Vor der Hintersitz-Rückenlehne 2 befindet sich eine hintere Sitzbank 3 in vorgeklappter Stellung. An der Seite der Hintersitz-Rückenlehne 2 ist ein Verriegelungsteil 4 zu erkennen, welches bei hochgeklappter Hintersitz-Rückenlehne über einen ortsfesten Bolzen 5 der Seitenwand der Karosseriestruktur zu greifen vermag, um die Hintersitz-Rückenlehne 2 in aufrechter Position zu sichern. Ein entsprechendes Verriegelungsteil ist natürlich auch an der gegenüberliegenden Seite der Hintersitz-Rückenlehne 2 vorgesehen.

Um beim Transport nicht sperriger Gegenstände die Sicht in den Laderaum auszuschließen, ist in Höhe der Oberkante der hochgeklappten Hintersitz-Rückenlehne 2 eine Laderaumabdeckung 6 vorgesehen, welche aus einem Mittelteil 7 und zwei Seitenteilen besteht, von denen ein Seitenteil 8 dargestellt ist. Die Seitenteile 8 sind unlösbar mit der Fahrzeugkarosserie verbunden. Sie weisen Schlösser 9, 10 auf, in welche das Mittelteil 7 lösbar einzugreifen vermag. Hierzu hat es seitlich vorspringende, auf der den Schlössern 9, 10 gegenüberliegenden Seite zu sehende Zapfen 11, 12, welche in jeweils ein Schloß 9, 10 eingreifen.

Wichtig für die Neuerung ist, daß die Laderaumabdeckung 6 durch Metallverstärkungen so steif ausgebildet ist, daß sie Kopfstützen 13, 14 ausreichend sicher zu tragen vermag.

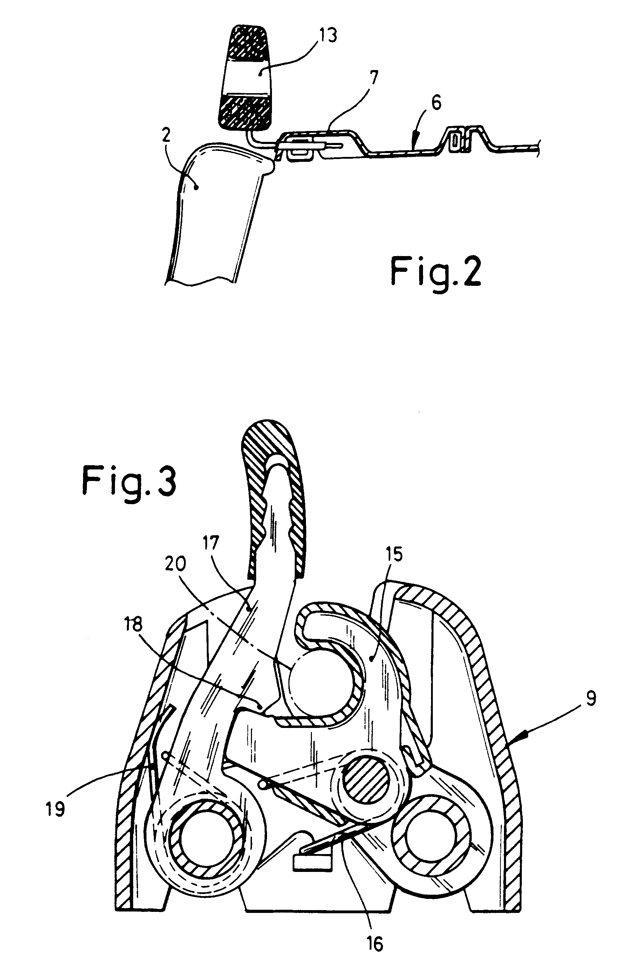

Die Figur 2 zeigt, wie die Kopfstütze 13 von vorn her in das Mittelteil 7 der Laderaumabdeckung 6 eingesetzt ist und läßt erkennen, daß sich die Kopfstütze 13 genau oberhalb der Hintersitz-Rückenlehne 2 befindet.

Die Figur 3 verdeutlicht die Gestaltung des Schlosses 9. Zu erkennen ist, daß dieses eine Drehfalle 15 hat, welche von einer Feder 16 in Entriegelungsstellung, also im Uhrzeigersinn, vorgespannt ist. Ein Entriegelungshebel 17 greift mit einem Nocken 18 über die Drehfalle 15 und hält diese dadurch in Verriegelungsstellung. Der Entriegelungshebel 17 ist durch eine Feder 19 im Uhrzeigersinn und damit in Sperrstellung gehalten. Strichpunktiert ist in Figur 3 ein Zapfen 20 dargestellt, welcher seitlich aus dem in den vorangehenden Figuren gezeigten Mittelteil herausragt und von der Drehfalle umgriffen wird. Schwenkt man den Entriegelungshebel 17 entgegen dem Uhrzeigersinn, so gibt der Nocken 18 die Drehfalle 15 frei, so daß sie sich im Uhrzeigersinn so weit verdrehen kann, daß der Zapfen 20 nach oben aus dem Schloß 9 zu gelangen vermag.

## Patentansprüche

1. Kraftfahrzeug mit einer umklappbaren Hintersitz-Rückenlehne und Kopfstützen, welche in einem in Höhe der Lehnenoberkante quer im Kraftfahrzeug verlaufenden Bauteil gehalten sind, dadurch gekennzeichnet, daß das Bauteil eine lösbar im Kraftfahrzeug angeordnete Laderaumabdeckung (6) ist.

2. Kraftfahrzeug nach Anspruch 1, dadurch gekennzeichnet, daß die Laderaumabdeckung (6) aus einem die Kopfstützen (13, 14) aufweisenden Mittelteil (7) besteht, das lösbar zwischen zwei mit dem Kraftfahrzeug unlösbar verbundenen Seitenteilen (8) gehalten ist.

3. Kraftfahrzeug nach Anspruch 2, dadurch gekennzeichnet, daß das Mittelteil (7) an seinen Seitenflächen vorspringende Zapfen (11, 12, 20) und die Seitenteile (8) entsprechende, entriegelbare Schlösser (9, 10) aufweist, weiche jeweils eine Drehfalle (15) zum formschlüssigen Halten des jeweiligen Zapfens (11, 12, 20) aufweisen.

4. Kraftfahrzeug nach Anspruch 3, dadurch gekennzeichnet, daß die Drehfalle (15) durch eine Feder (16) in Entriegelungsstellung vorgespannt und in Verriegelungsstellung durch einen Entriegelungshebel (17) gehalten ist, welcher mit einem vorspringenden Nocken (18) über die Drehfalle (15) greift und von einer Feder (19) in dieser Verriegelungsstellung gehalten ist.

5. Kraftfahrzeug nach zumindest einem der vorangehenden Ansprüche, dadurch gekennzeichnet, daß die Hintersitz-Rückenlehne (2) in aufrechter Stellung an den beiden Seitenwänden der Karosserie arretiert ist.

## Claims

1. Motor vehicle with a reversible rear seat back rest and head rests which are supported by a structure running transverse in the vehicle at a height of the upper edge of the back rest, characterised in that the structure is a loading space cover (6) releasibly arranged in the motor vehicle.

2. Motor vehicle according to claim 1, characterised in that the loading space cover (6) consists of a middle part (7), comprising the head rests (13, 14), which is releasibly held between two side parts (8) which are non-releasibly connected to the motor vehicle.

3. Motor vehicle according to claim 2, characterised in that the middle part (7) has pins (11, 12, 20) projecting from its side surfaces and unlockable locks (9, 10) corresponding to the side parts (8), the locks (9, 10) each having a rotary latch (15) for positively holding the respective pin (11, 12, 20).

4. Motor vehicle according to claim 3, characterised in that the rotary latch (15) through a spring (16) is biased in the unlocking position and held in the locking position by an unlocking lever (17) which through a projecting cam (18) engages over the rotary latch (15) and is held in this locking position by a spring (19).

5. Motor vehicle according to at least one of the preceding claims, characterised in that the rear seat back rest (2) is locked in the upright position to both side walls of the body.

## Revendications

1. Véhicule automobile, comportant un dossier de siège arrière rabattable et des appuie-tête qui sont maintenus dans un composant s'étendant transversalement dans le véhicule, à hauteur du bord supérieur du dossier, caractérisé par le fait que le composant est un organe de recouvrement (6) qui ferme l'espace de chargement et est monté amovible dans le véhicule.

2. Véhicule selon revendication 1, caractérisé par le fait que l'organe de recouvrement de l'espace de chargement (6) est constitué par une partie centrale (7) présentant les appuie-tête (13, 14) et maintenue de manière amovible entre deux parties latérales (8) liées de manière indémontable au véhicule.

3. Véhicule selon revendication 2, caractérisé par le fait que la partie centrale (7) présente des tétons (11, 12, 20) formant saillie sur ses faces latérales, et les parties latérales (8) présentent des verrous correspondants (9, 10), déverrouillables, qui présentent chacun un organe tournant avec échancrure (15) pour tenir, par conjugaison de formes, le téton correspondant (11, 12, 20).

4. Véhicule selon revendication 3, caractérisé par le fait que l'organe tournant avec échancrure (15) est précontraint, par un ressort (16), vers la position de déverrouillage et est maintenu en position de verrouillage par un levier de déverrouillage (17) qui, par un mentonnet en saillie (18), s'engage par-dessus ledit organe avec échancrure (15) et est maintenu dans cette position de verrouillage par un ressort (19).

5. Véhicule selon au moins l'une des revendications précédentes, caractérisé par le fait que, dans sa position verticale, le dossier (2) du siège arrière est arrêté contre les deux parois latérales de la carrosserie.
